# EUROPEAN PATENT APPLICATION

(11) **EP 4 712 451 A1**
(43) Date of publication of application: **18.03.2026**
(21) Application number: 24806217.6
(22) Date of filing: 03.04.2024
(51) Int. Cl.: H04L 69/08, H04L 69/22, H04L 69/16, H04L 67/12, H04L 12/66, H04L 69/30, H04L 12/46, H04L 69/18, H04W 8/26

(54) **DATA TRANSMISSION METHOD AND APPARATUS, AND STORAGE MEDIUM**

(30) Priority: 16.05.2023 CN 202310555951
(71) Applicant: ZTE Corporation, Shenzhen, Guangdong 518057 (CN)
(72) Inventor: ZHAO, Yonggang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/085747
(87) International publication number: WO 2024/234858

(57) **Abstract**

Provided are a data transmission method and apparatus, and a storage medium. The data transmission method is applied to a gateway, and comprises: when receiving or sending data messages, then within a MAC layer, unifying the data messages into a target format; the layer below the MAC layer being a link layer supporting at least two communication protocols; the layer above the MAC layer not distinguishing between the at least two communication protocols; and the layer above the MAC layer comprising: a network layer, a transmission layer, and an application layer.

## Description

The present disclosure claims a priority to Chinese Patent Application No. 202310555951.4, and filed on May 16, 2023, the entire content of which is incorporated into the present application by reference.

### TECHNICAL FIELD

The present disclosure relates to the field of communication technologies, and in particular, to a data transmission method and apparatus, and a storage medium.

### BACKGROUND

Smart homes are Internet of Things (IoT) devices with broad market prospects. However, there are currently many manufacturers of smart homes, and communication protocols used by the smart homes produced by different manufacturers are different, which leads to the inability of the smart homes to communicate with each other.

### SUMMARY

In an aspect, the embodiments of the present disclosure provide a data transmission method, applied to a gateway. The data transmission method includes: in a case where a data packet is received or sent, unifying the data packet into a target format at a mac layer; where a lower layer of the mac layer is a link layer that supports at least two communication protocols; an upper layer of the mac layer does not distinguish at least two communication protocols; and the upper layer of the mac layer includes: a network layer, a transport layer, and an application layer.

In another aspect, the embodiments of the present disclosure provide a data transmission apparatus. The data transmission apparatus includes: a data packet unifying unit, configured to: in a case where a data packet is received or sent, unify the data packet into a target format at a mac layer; where a lower layer of the mac layer is a link layer that supports at least two communication protocols; an upper layer of the mac layer does not distinguish at least two communication protocols; and the upper layer of the mac layer includes: a network layer, a transport layer, and an application layer.

In yet another aspect, the embodiments of the present disclosure provide a data transmission apparatus. The data transmission apparatus includes: a memory and a processor; the memory is coupled with the processor; the memory is configured to store a computer program; and the processor, when executing the computer program, implements the data transmission method described in any one of the above aspects.

In yet another aspect, the embodiments of the present disclosure provide a computer readable storage medium. The computer readable storage medium has stored computer program instructions thereon, and the computer program instructions, when executed by a processor, implement the data transmission method described in any one of the above aspects.

In yet another aspect, the embodiments of the present disclosure provide a computer program product. The computer program product includes computer program instructions, and the computer program instructions, when executed by a processor, implement the data transmission method described in any one of the above aspects.

### BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.
FIG. 1 is a schematic diagram of an implementation environment involved in a data transmission method according to some embodiments.
FIG. 2 is a schematic diagram of a gateway layered model according to some embodiments.
FIG. 3 is a flow chart of a data transmission method according to some embodiments.
FIG. 4 is a schematic diagram of a target format according to some embodiments.
FIG. 5 is a schematic diagram of an intermediate data packet according to some embodiments.
FIG. 6 is a schematic diagram of a second data packet according to some embodiments.
FIG. 7 is a schematic diagram of a data packet encapsulation and decapsulation process according to some embodiments.
FIG. 8 is a structural schematic diagram of a data transmission apparatus according to some embodiments.
FIG. 9 is a structural schematic diagram of another data transmission apparatus according to some embodiments.

### DETAILED DESCRIPTION

The technical solutions in the present disclosure will be described clearly and completely below in conjunction with the drawings in the present disclosure. Obviously, the described embodiments are merely some but not all of the embodiments of the present disclosure. Based on the embodiments in the present disclosure, all other embodiments obtained by those ordinary skilled without creative efforts shall fall within the protection scope of the present disclosure.

It should be noted that, in the present disclosure, the expressions such as "exemplary/exemplarily" or "for example" are used to present an example, illustration, or explanation. Any embodiment or design scheme described with "exemplary/exemplarily" or "for example" in the present disclosure should not be construed as preferred or advantageous over other embodiments or design schemes. Rather, the usage of the expressions, such as "exemplary/exemplarily" or "for example", is intended to present relevant concepts in a detailed manner.

Hereinafter, terms such as "first" and "second", etc., are used for descriptive purposes only, but cannot be understood to indicate or imply the relative importance or implicitly indicate the number of the indicated technical features. Thus, features defined with "first" or "second", etc., may explicitly or implicitly include one or more such features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

Different smart homes cannot communicate with each other because they use different communication protocols. In order to solve the intercommunication problem of smart homes, some technologies have proposed an application layer protocol based on IPv6, the Matter protocol. This protocol relies on underlying protocols such as wireless fidelity (WiFi), Ethernet and thread that are adapted to IPv6. To use this matter protocol, smart homes need to support any one of the three protocols: WiFi, Ethernet or thread. In addition, the matter protocol architecture is relatively complex, and smart homes using this protocol need to be equipped with high-performance chips. Therefore, the matter protocol has certain requirements for the network supported by the smart home, and the cost of using this protocol is relatively high.

Based on this, the embodiments of the present disclosure propose a data transmission method, which is applied to a gateway. The lower layer of the mac layer of the gateway is a link layer that supports at least two communication protocols. When the gateway receives or sends a data packet, a format of the data packet is unified into a target format at the mac layer, so that an upper layer of the mac layer no longer distinguishes the communication protocol of the data packet when processing the data packet. In this method, since the lower layer of the mac layer of the gateway is the link layer that supports at least two communication protocols, the gateway may process data packets of at least two communication protocols. Simultaneously, since the gateway performs format uniformity processing at the lower mac layer of the network layer, this method has no network restrictions compared with the traditional technology that the matter protocol is limited to the IPv6 network protocol. In addition, the implementation complexity of the method of the present disclosure is reduced, the gateway does not need to be equipped with a high-performance chip, and the cost of use may be reduced.

The implementations of the embodiments of the present disclosure are described in detail below in conjunction with the drawings.

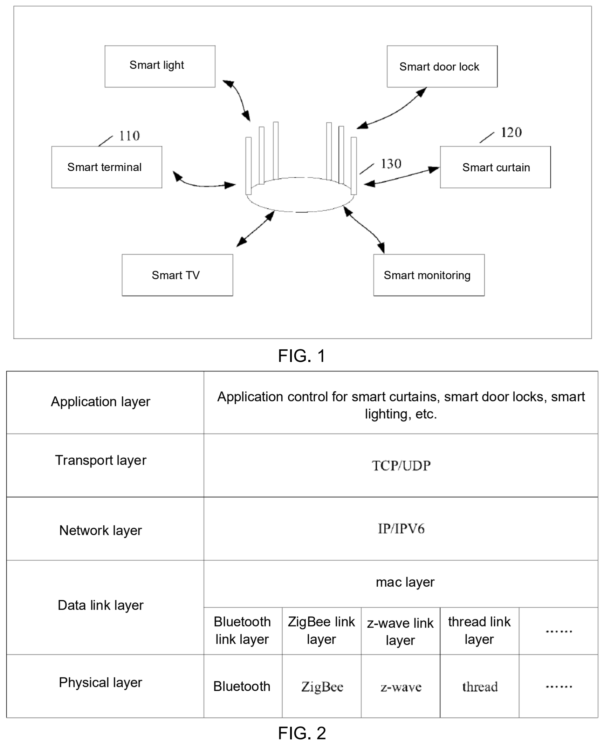

FIG. 1 is an implementation environment involved in a data transmission method provided by the embodiments of the present disclosure. The implementation environment includes: a first device 110, a second device 120 and a gateway 130.

The first device 110 and the second device 120 are two devices with different communication protocols. The first device 110 and the second device 120 may unify the format of the transmitted data packet through the gateway 130 to complete the communication.

FIG. 1 shows that a gateway 130 is connected to a plurality of smart devices, and the first device 110 and the second device 120 are any two of the plurality of devices shown in FIG. 1. Exemplarily, the first device 110 and the second device 120 respectively may be: smart lights, smart door locks, smart curtains, smart monitoring, smart TVs or smart terminals, etc.

The gateway 130 is also referred to as an inter-network connector or a protocol converter. The gateway 130 is used between two systems with different communication protocols, data formats or languages, and even completely different architectures, enabling interconnection between network devices with different protocols. The gateway 130 may be used for both wide area network interconnection and local area network interconnection.

In the embodiments of the present disclosure, FIG. 2 shows a layered model of the gateway 130, and the gateway 130 includes a physical layer, a data link layer, a network layer, a transport layer, and an application layer.

The physical layer: a hardware part, is responsible for transmitting a bitstream, including various transmission media (for example, copper wire, optical fiber, or wireless channel, etc.).

The data link layer: is responsible for encapsulating data packets sent from the network layer into frames and is responsible for transmitting data packets on the transmission media of the physical layer. In the embodiments of the present disclosure, the data link layer includes a protocol link layer and a unified mac layer. The protocol link layer is below the mac layer. The mac layer unifies the format of the data packet that is received or sent. The lower layer of the mac layer includes a plurality of protocol link layers such as the Bluetooth link layer, ZigBee link layer, z-wave link layer and thread link layer, etc.

The network layer: provides host-to-host services. The network layer determines a communication path from a sending device to a receiving device and encapsulates the Internet Protocol (IP) addresses of the sending device and receiving device into the IP header field. The network layer may support both IPv4 network protocol and IPv6 network protocol. In the present disclosure, the network layer does not distinguish the IPv4 network protocol and IPv6 network protocol.

The transport layer: provides end-to-end services. The transport layer acquires services from the network layer and provides services to the application layer. The transport layer supports a transmission control protocol (TCP) or a user data protocol (UDP).

The application layer: provides data transmission services for applications. In the embodiments of the present disclosure, the application is an application installed in a device (e.g., the first device 110 or the second device 120) to which the gateway is connected.

The working procedure of the gateway 130 in the embodiments of the present disclosure is: receiving a packet sent from the first device 110 at the physical layer, unifying a format at the mac layer of the data link layer, decapsulating it layer by layer through the network layer, the transport layer and the application layer to obtain target data, and then transmitting the target data from the application layer, the transport layer and the network layer to the mac layer of the data link layer, unifying the format at the mac layer to obtain a second packet, and then decapsulating and reassembling the second packet based on the communication protocol used by the second device 120, to obtain a third packet sent to the second device 120.

As described above, the first device 110 and the second device 120 are both connected to the gateway 130 via a wired manner or a wireless manner, and the first device 110 and the second device 120 may communicate with each other through the gateway 130. The first device 110 and the second device 120 may be one or more. The embodiments of the present disclosure do not limit a number of the first device 110 and the second device 120.

In a scenario, the first device 110 is a smart monitoring, the second device 120 is a smart washing machine, and the first device 110 and the second device 120 establish a connection through the gateway 130. The user sends control commands to the smart washing machine through the smart monitoring to control the operation of the smart washing machine. The control commands are sent from the smart monitoring to the gateway 130, and the gateway 130, after reorganizing the control commands sent from the smart monitoring to the smart washing machine based on the target format, and then sends control commands that are reorganized to the smart washing machine to control the operation of the smart washing machine.

Hereinafter, the data transmission method provided by the embodiments of the present disclosure will be explained in detail.

The data transmission method provided in the embodiments of the present disclosure may be applied to a gateway 130. An execution entity of the data transmission method provided in the embodiments of the present disclosure may also be a data transmission apparatus. The data transmission apparatus may be a gateway, or an application (APP) installed in the gateway that provides a data transmission function, or a central processing unit (CPU) in the gateway, or a control module in the gateway for performing the data transmission method. Take the gateway as an example to explain the method provided in the embodiments of the present disclosure below.

The embodiments of the present disclosure propose a data transmission method, in which the lower layer of the mac layer of the gateway is a link layer that supports at least two communication protocols, and the upper layer of the mac layer does not distinguish the at least two communication protocols. In a case where the gateway receives or sends data packets, the gateway unifies the data packets into the target format at the mac layer.

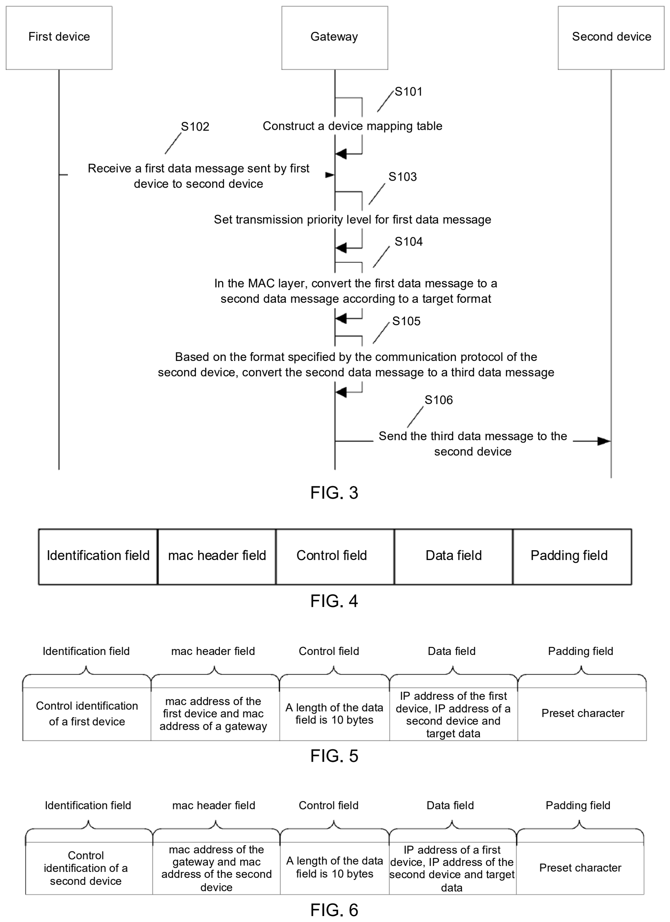

FIG. 3 is a flow chart of a data transmission method according to some embodiments. The method is applied to a gateway, the gateway is connected to a first device and a second device. The first device and the second device use different communication protocols, as shown in FIG. 3. The method may include S101 to S106.

S101: a gateway establishes a device mapping table.

The device mapping table is a table including a correspondence between the IP address, a control identification, and an identification of a link layer of the communication protocol used by the device accessing the gateway.

The control identification of the device accessing the gateway includes an identification of the device and an identification of the communication protocol used by the device. For example, the gateway uses DCI to represent the control identification, the DCI includes two parts (for example, DI and CI), DI is the identification of the device, and CI is the identification of the communication protocol used by the device.

The communication protocols used by the above device include but are not limited to: WiFi, Bluetooth, ZigBee, z-wave or Thread, etc.

In an implementation, the gateway acquires the IP addresses of the first device and the second device that are connected, and allocates control identifications DCI and identifications of link layers of the communication protocols used by the first device and the second device to the first device and the second device respectively, and stores them in the device mapping table.

In an example, for the first device and the second device for accessing the gateway, if a communication protocol used by the first device is the Bluetooth protocol, the gateway uses "A" to represent the identification of the first device, "1" to represent the Bluetooth protocol, and "x1" to represent the identification of the link layer of the Bluetooth protocol, then the DCI of the first device is A1, and the identification of the link layer of the communication protocol used by the first device is "x1"; if a communication protocol used by the second device is the WiFi protocol, the gateway uses "B" to represent the identification of the second device, "2" to represent the WiFi protocol, and "x2" to represent the identification of the link layer of WiFi, then the DCI of the second device is B2, and the identification of the link layer of the communication protocol used by the second device is "x2". The gateway stores the above information in the device mapping table, such as the device mapping table shown in Table 1, which includes the correspondence between "IP address", "control identification DCI" and "identification of the link layer of the communication protocol".

**Table 1**

| IP address | Control identification DCI | Identification of a link layer of a communication protocol |
|---|---|---|
| 192.xxx.xxx.xx1 | A1 | x1 |
| 192.xxx.xxx.xx2 | B2 | x2 |

The gateway stores the IP address and other information of the connected device that are acquired in the device mapping table. When the devices communicate with each other subsequently, the gateway may directly query pre-stored information of respectively device in the device mapping table, quickly complete the subsequent decapsulation and reassembly workflow of the data packet, and improve the processing speed of the method in the present disclosure.

S102: the gateway receives a first data packet sent from a first device to a second device.

The first data packet includes target data. The format of the first data packet is a format specified by the communication protocol used by the first device.

The target data is data that the first device actually wants to send to the second device. For example, when the first device is a smart monitoring and the second device is a smart curtain, when the smart monitoring needs to control the smart curtain to open, the target data is: opening the curtain.

The first data packet is obtained after the first device encapsulates the target data into a packet according to the format specified by the communication protocol used by the first device. The first data packet further includes: the IP address of the first device and the IP address of the second device.

In an example, the communication protocol used by the first device is the Bluetooth protocol, and the first data packet is a packet obtained by encapsulating by the first device, the target data based on the format specified by the Bluetooth protocol.

S103 (in some embodiments): the gateway sets a sending priority for the first data packet.

The sending priority indicates an order in which the gateway sends the first data packet.

In a case where the gateway receives a plurality of data packets, the gateway respectively sends the plurality of data packets according to the order of sending priority of the plurality of data packets. The plurality of data packets include the first data packet.

In an implementation, if the gateway receives data packets sent from a plurality of devices simultaneously, the sending priorities set by the gateway for respective data packets are determined based on a number of data packets buffered respectively by the plurality of devices in the gateway. For example, in a case where the number of data packets sent from the first device buffered in the gateway is greater, the gateway sets a higher sending priority for the first data packet.

In an example, before receiving the first data packet sent from the first device, the gateway has buffered 10 data packets sent from the first device, and also buffered 2 data packets sent from a third device (for example, as shown in FIG. 1, the third device may be any one of devices connected to the gateway except the first device and the second device). At this time, if the gateway simultaneously receives the first data packet sent from the first device and a data packet sent from the third device, the sending priority set by the gateway for the first data packet is higher than the sending priority set for the data packet sent from the third device.

Since the first device has buffered a large number of data packets in the gateway, when the first device continues to send the first data packet to the gateway, in order to avoid the data packets sent from the first device from being backlogged in the gateway, the gateway sets a higher priority for the packets sent from the first device.

In another implementation, if the gateway receives data packets sent from only one device, the gateway sets a sending priority for the data packets sent from the device according to a time sequence of receiving the data packets. The earlier the gateway receives a data packet, the higher the priority of the data packet.

S104: the gateway converts the first data packet into a second data packet according to the target format at the mac layer.

The second data packet includes target data.

In some embodiments, FIG. 4 is a schematic diagram of the target format according to some embodiments. In FIG. 4, the target format includes: an identification field, a mac header field, a control field, and a data field set sequentially. In some embodiments, the target format further includes: a padding field.

The identification field is used to carry: the identification of the device for sending the data packet, the identification of the communication protocol used by the device for sending the data packet; or the identification of the device for receiving the data packet, the identification of the communication protocol used by the device for receiving the data packet.

The mac header field is used to carry: a mac address of a device for sending and receiving a data packet.

The control field is used to carry a data format of a data field. For example, the encoding manner of the data field (for example, Manchester encoding) is the total length set for the data field.

The data field is used to carry: an IP address, and target data of a device for sending and receiving a data packet.

The above data fields may also be referred to as a service data unit (SDU).

The padding field is used to carry a preset character, and the preset character is used to pad the data field with data in a case where a data length of the data field is less than a total length of the data field.

In an example, when the control field sets the total length of the data field to 100 bytes, and the actual data length of the IP address of the device for sending and/or receiving the data packet and the target data is 80 bytes, the remaining 20 bytes are padded with preset characters. At this time, the preset characters of the 20 bytes are the padding field.

In some embodiments, in S103, the gateway may carry the sending priority set for the first data packet in the target format. For example, in a case where the target format includes a control field, the sending priority set for the first data packet is carried in the control field of the target format.

It is a better setting manner to carry the sending priority of packet in the control field, which makes it easier for the gateway to manage the packet. Of course, the sending priority may also be carried in other fields of the packet, which is not limited to the embodiments of the present disclosure.

An implementation method of S104 is proposed below. S104 includes S104a to S104d.

S104a: the gateway decapsulates and reassembles the first data packet according to the target format at the mac layer, to obtain an intermediate data packet based on the IP address of the first device and a first correspondence.

The first correspondence is a correspondence between the IP address of the first device, the control identification of the first device, and the identification of the link layer of the communication protocol used by the first device. The control identification of the first device includes an identification of the first device and an identification of a communication protocol used by the first device.

The intermediate data packet includes but is not limited to the control identification of the first device, the IP address of the second device and the target data.

In an example, FIG. 5 is a schematic diagram of an intermediate data packet conforming to a target format according to some embodiments. The intermediate data packet shown in FIG. 5 includes: an identification field, a mac header field, a control field, a data field, and a padding field. The identification field carries the control identification of the first device, the mac header field carries a mac address of the first device and a mac address of the gateway, the control field carries a total length set for the data field (for example: 10 bytes), the data field carries the IP address of the first device, the IP address of the second device and the target data, and the padding field carries the preset character.

In some embodiments, in S101, the device mapping table includes the first correspondence, and the gateway finds the control identification of the first device corresponding to the IP address of the first device in the intermediate data packet based on the IP address of the first device and the first correspondence in the device mapping table.

S104b: the gateway transmits the intermediate data packet from the mac layer to an upper layer.

The gateway decapsulates the intermediate data packet through the network layer, the transport layer and the application layer by layer by layer, to obtain the target data.

In this process, the network layer, the transport layer and the application layer decapsulate the intermediate data packet by layer by layer, which is a process of removing the header field of each layer, and finally obtaining the target data after reaching the application layer.

S104c: upper layer of the mac layer of the gateway, after acquiring the target data, encapsulates the target data from top to bottom and transmits it to the mac layer of the gateway.

The upper layers of the mac layer include: the network layer, the transport layer and the application layer.

The gateway, after obtaining the target data at the upper layer of the mac layer, encapsulates the target data again from the application layer, the transport layer and the network layer sequentially and transmits it down to the mac layer and the upper layer of the mac layer of the gateway encapsulates the target data according to the target format unified by the mac layer when encapsulating the target data sequentially, and no longer distinguishes the formats specified by each protocol.

Since a port number in the header field removed when the intermediate data packet goes through the transport layer in S104b is different from a port number in the header field allocated by the gateway to the intermediate data at the transport layer in S104c, the gateway needs to transmit the intermediate data packet to the upper layer first, and then transmit the intermediate data packet from the upper layer to the lower layer to encapsulate a new port number.

S104d: the gateway, after acquiring the target data in the intermediate data packet at the upper layer of the mac layer, based on the IP address of the second device and the second correspondence, encapsulates the target data into a second data packet according to the target format at the mac layer.

The second data packet includes but is not limited to: the control identification of the second device, the IP address of the second device and the target data.

The second correspondence is a correspondence between the IP address of the second device, the control identification of the second device, and the identification of the link layer of the communication protocol used by the second device. The control identification of the second device includes an identification of the second device and an identification of a communication protocol used by the second device.

In some embodiments, the device mapping table includes the second correspondence, and the gateway acquires the second correspondence based on the device mapping table.

In an example, FIG. 6 is a schematic diagram of a second data packet conforming to a target format according to some embodiments. The second data packet shown in FIG. 6 includes: an identification field, a mac header field, a control field, a data field, and a padding field. The identification field carries the control identification of the second device, the mac header field carries a mac address of the gateway and a mac address of the second device, the control field carries a total length set for the data field (for example: 10 bytes), the data field carries the IP address of the first device, the IP address of the second device and the target data, and the padding field carries the preset character.

In some embodiments, in S101, the device mapping table includes the second correspondence, and the gateway finds the control identification of the second device corresponding to the IP address of the second device included in the second data packet based on the IP address of the second device and the second correspondence in the device mapping table.

In S104, the gateway converts the first data packet into the second data packet according to the target format, that is, S104 is the process of unifying the first data packet into the target format. In the process, through the implementation method of S104a to S104d, the gateway no longer distinguishes the formats of respective communication protocols at the upper layer of the mac layer, that is, after the gateway proposed in the embodiments of the present disclosure unifies the format of data packets at the mac layer, there is no restriction on usage scenarios.

S105: the gateway converts the second data packet into a third data packet based on a format specified by the communication protocol used by the second device.

The third data packet includes target data. In some embodiments, the third data packet further includes the IP address of the second device.

For example, first, the gateway obtains the communication protocol used by the second device through the control identification of the second device included in the second data packet.

Secondly, the gateway decapsulates and reassembles the second data packet according to the format specified by the communication protocol used by the second device, to obtain a third data packet.

Since the second device can only recognize data packets encapsulated in the format specified by the communication protocol used by itself, the gateway needs to convert the format of the second data packet into a format of a data packet (i.e., the third data packet) that the second device can recognize before sending the second data packet.

S106: the gateway sends the third data packet to the second device.

In some embodiments, the gateway sends the third data packet to the second device through the link layer of the communication protocol used by the second device.

Since the device mapping relationship table stores the IP address of the second device and the identification of the link layer of the communication protocol used by the second device, the gateway may determine the link layer of the communication protocol used by the second device through the mapping relationship table.

As shown in FIG. 2, since the gateway unifies the link layers of different communication protocols at the mac layer of the data link layer, and then, when the gateway transmits the third data packet from the mac layer to the lower physical layer, the gateway needs to transmit the physical layer based on the link layer channel of the communication protocol of the third data packet.

In the method proposed in the embodiments of the present disclosure, first of all, the format of the data packet received or sent in the lower mac layer of the network layer may be unified, that is, the data packet no longer distinguishes the packet format at the network layer. Therefore, the method proposed in the embodiments of the present disclosure is not limited to the network protocol and may be compatible with communication protocols using both IPv4 network protocol and IPv6 network protocol. Secondly, the method proposed in the embodiments of the present disclosure reduces implementation complexity and does not require the gateway to be equipped with a high-performance chip, thereby reducing the cost of use. Finally, by using the method in the embodiments of the present disclosure, there is no need to pay authorization and authentication fees, and the cost of use may be saved.

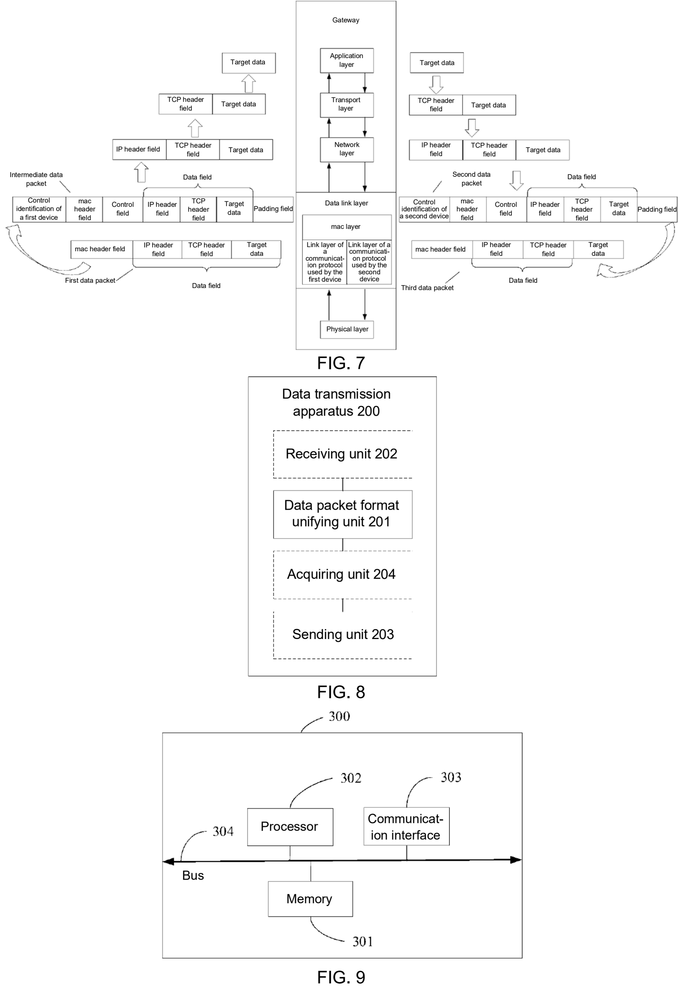

In an example, FIG. 7 shows a process that S102 to S106 are performed. FIG. 7 is a schematic diagram of a detailed encapsulation, decapsulation and reassembly process of target data in the gateway layered model shown in FIG. 2 when the first device sends the target data to the second device through the gateway. The process, for example, includes: receiving a first packet from a link layer of a communication protocol used by a first device, decapsulating and reassembling the first packet into an intermediate packet at a mac layer, decapsulating the intermediate packet through an upper layer of the mac layer, and encapsulating it at the mac layer to obtain a second packet, decapsulating and reassembling the second packet into a third packet, and sending the third packet from link layer of the communication protocol used by a second device. The data field of the above packet includes an IP header field, a TCP header field and target data, and the IP header field includes an IP address of the first device and an IP address of the second device. A port number in the TCP header field during the decapsulation of the intermediate packet is a port number allocated by the first device when encapsulating the first packet, and the port number is different from a port number in the TCP header field during the encapsulation of the target data by the gateway.

It can be understood that, in order to implement the above functions, the data transmission apparatus contains corresponding hardware structures and/or software modules for performing various functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the data transmission apparatus may be divided into functional modules according to the above-mentioned method embodiments, and for example, each functional module may be divided corresponding to each function, or two or more functions may also be integrated into one functional module. The above integrated module is implemented in the form of hardware or in the form of software. It should be noted that the division of modules in the embodiments of the present disclosure is exemplary, and is merely a kind of logical functional division, and there may be other division methods in actual implementations. The example in which each functional module is divided corresponding to each function, is taken for explanation below.

FIG. 8 is a structural schematic diagram of a data transmission apparatus according to some embodiments and for example, the data transmission apparatus may be the gateway shown in FIG. 1. The data transmission apparatus may perform the data transmission method provided by the above method embodiments. As shown in FIG. 8, the data transmission apparatus 200 includes: a data packet format unifying unit 201, configured to: in a case where a data packet is received or sent, unify the data packet into a target format at a mac layer; where a lower layer of the mac layer is a link layer that supports at least two communication protocols; an upper layer of the mac layer does not distinguish at least two communication protocols; and the upper layer of the mac layer includes: a network layer, a transport layer, and an application layer. For example, the data packet format unifying unit 201 is applied to S103 in the method embodiments.

In some embodiments, the gateway connects a first device and a second device, communication protocols used by the first device and the second device are different, and the link layer of the at least two communication protocols include link layers of communication protocols used by the first device and the second device; the gateway further includes a receiving unit 202, configured to receive a first data packet sent from the first device to the second device before the data packet is unified into the target format at the mac layer; where the first data packet is a data packet received by the gateway; the first data packet includes target data; and a format of the first data packet is a format specified by a communication protocol used by the first device; the data packet format unifying unit 201 is configured to convert the first data packet into a second data packet according to the target format at the mac layer; where the second data packet includes the target data; the data packet format unifying unit 201 is further configured to convert the second data packet into a third data packet based on a format specified by a communication protocol used by the second device after the data packet is unified into the target format at the mac layer; where the third data packet is a data packet sent from the gateway; and the third data packet includes the target data; the gateway further includes a sending unit 203, configured to send the third data packet to the second device. For example, as shown in FIG. 3, the receiving unit 202 is applied to S102 in the method embodiments, the data packet format unifying unit 201 is applied to S103 and S104 in the method embodiments, and the sending unit 203 is applied to S105 in the method embodiments.

In some embodiments, the first data packet further includes an IP address of the first device and an IP address of the second device, and the data packet format unifying unit 201 is configured to, decapsulate and reassemble the first data packet according to the target format at the mac layer based on the IP address of the first device and a first correspondence, to obtain an intermediate data packet; where the first correspondence includes a correspondence between the IP address of the first device and a control identification of the first device, the control identification of the first device includes an identification of the first device and an identification of the communication protocol used by the first device; the intermediate data packet includes the control identification of the first device, the IP address of the second device, and the target data; after the target data in the intermediate data packet is acquired at the upper layer of the mac layer, encapsulate the target data into the second data packet according to the target format at the mac layer, based on the IP address of the second device and a second correspondence; where the second correspondence includes a correspondence between the IP address of the second device and a control identification of the second device, and the control identification of the second device includes an identification of the second device and an identification of the communication protocol used by the second device; the second data packet includes: the control identification of the second device, the IP address of the second device and the target data. For example, the data packet format unifying unit 201 is applied to S104a to S104d in the method embodiments.

In some embodiments, the gateway further includes an acquiring unit 204, configured to acquire the IP address of the first device, the control identification of the first device, the IP address of the second device, and the control identification of the second device respectively, before the first data packet sent from the first device to the second device is received; and establish the first correspondence and the second correspondence. For example, as shown in FIG. 3, the acquiring unit 204 is applied to S101 in the method embodiments.

In some embodiments, the second correspondence further includes a correspondence between the IP address of the second device and an identification of a link layer of the communication protocol used by the second device; the sending unit 203 is configured to send the third data packet to the second device through the link layer of the communication protocol used by the second device. For example, as shown in FIG. 3, the sending unit 203 is applied to S106 in the method embodiments.

In some embodiments, the target format includes: an identification field, a mac header field, a control field, and a data field set sequentially; the identification field is used to carry: an identification of a device for sending/receiving a data packet, and an identification of a communication protocol used by a device for sending/receiving a data packet; the mac header field is used to carry: a mac address of a device for sending and receiving a data packet; the control field is used to carry a data format of a data field; the data field is used to carry: an IP address of a device for sending and receiving a data packet, and target data.

In some embodiments, the target format further includes a padding field; the padding field is used to carry a preset character, and the preset character is used to pad the data field with data in a case where a data length of the data field is less than a total length of the data field.

In some embodiments, the target format is also used to carry a sending priority of the data packet; the sending unit 203 is further configured to, in response to that the gateway receives a plurality of data packets, send the plurality of data packets according to an order of a sending priority of the plurality of data packets respectively; where the plurality of data packets include the first data packet. For example, the sending unit 203 is applied to S103 in the method embodiments.

In some embodiments, the sending priority of the data packet is determined based on a number of data packets buffered by the gateway; in response to that the number of data packets sent from the first device buffered in the gateway is greater, the sending priority set for the first data packet is higher.

In some embodiments, in response to that the target format includes the control field, the control field is further used to carry a sending priority of the data packet.

In some embodiments, the communication protocol includes: WiFi, Bluetooth, ZigBee, z-wave, or Thread.

In a case where the functions of the above integrated modules are implemented in the form of hardware, the embodiments of the present disclosure provide another structure of the data transmission apparatus involved in the above embodiments, as shown in FIG. 9. The data transmission apparatus 300 includes a processor 302 and a bus 304. In some embodiments, the data transmission apparatus may further include a memory 301; in some embodiments, the data transmission apparatus may further include a communication interface 303.

The processor 302 may implement or perform various exemplary logical blocks, modules and circuits described in conjunction with the embodiments of the present disclosure. The processor 302 may be a central processing unit, a general-purpose processor, a digital signal processor, an application specific integrated circuit, a field programmable gate array or other programmable logic devices, a transistor logic device, a hardware component or any combination thereof. The processor 302 may implement or perform various exemplary logical blocks, modules and circuits described in conjunction with the embodiments of the present disclosure. The processor 302 may also be a combination that implements computing functions, for example, including a combination of one or more microprocessors, a combination of a digital signal processor (DSP) and a microprocessor, or the like.

The communication interface 303 is configured to connect with other devices via a communication network. The communication network may be an Ethernet, a radio access network, a wireless local area network (WLAN), or the like.

The memory 301 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 301 may exist independently of the processor 302, and the memory 301 may be connected to the processor 302 via the bus 304 and is used for storing instructions or program codes. The processor 302, when calling and executing the instructions or program codes stored in the memory 301, is capable of implementing the data transmission method provided in the embodiments of the present disclosure.

As another implementation, the memory 301 may be integrated with the processor 302.

The bus 304 may be an extended industry standard architecture (EISA) bus or the like. Buses 304 may be divided into address buses, data buses, control buses, and the like. For the convenience of representation, only one thick line is used in FIG. 9 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the data transmission method as described in any embodiment of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, when running on a computer, causes the computer to perform the data transmission method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A data transmission method, **characterized in that** the method is applied to a gateway and comprises:
in response to receiving or sending a data packet, unifying the data packet into a target format at a mac layer;
wherein a lower layer of the mac layer is a link layer that supports at least two communication protocols; and an upper layer of the mac layer does not distinguish the at least two communication protocols; and the upper layer of the mac layer comprises: a network layer, a transport layer and an application layer.

2. The method according to claim 1, wherein the gateway connects a first device and a second device, communication protocols used by the first device and the second device are different, and link layers of the at least two communication protocols comprise link layers of communication protocols used by the first device and the second device;
before unifying the data packet into a target format at a mac layer, the method further comprises:
receiving a first data packet sent from the first device to the second device; wherein the first data packet is a data packet received by the gateway; the first data packet comprises target data; and a format of the first data packet is a format specified by a communication protocol used by the first device;
unifying the data packet into the target format at the mac layer comprises:
converting the first data packet into a second data packet according to the target format at the mac layer; wherein the second data packet comprises the target data;
after unifying the data packet into the target format at the mac layer, the method further comprises:
converting the second data packet into a third data packet based on a format specified by a communication protocol used by the second device; wherein the third data packet is a data packet sent from the gateway; and the third data packet comprises the target data; and
sending the third data packet to the second device.

3. The method according to claim 2, wherein the first data packet further comprises an Internet Protocol (IP) address of the first device and an IP address of the second device, and converting the first data packet into the second data packet according to the target format at the mac layer comprises:
decapsulating and reassembling the first data packet according to the target format at the mac layer based on the IP address of the first device and a first correspondence, to obtain an intermediate data packet; wherein the first correspondence comprises a correspondence between the IP address of the first device and a control identification of the first device, the control identification of the first device comprises an identification of the first device and an identification of the communication protocol used by the first device; the intermediate data packet comprises the control identification of the first device, the IP address of the second device, and the target data; and
after acquiring the target data in the intermediate data packet at the upper layer of the mac layer, encapsulating the target data into the second data packet according to the target format at the mac layer based on the IP address of the second device and a second correspondence; wherein the second correspondence comprises a correspondence between the IP address of the second device and a control identification of the second device, and the control identification of the second device comprises an identification of the second device and an identification of the communication protocol used by the second device; the second data packet comprises: the control identification of the second device, the IP address of the second device and the target data.

4. The method according to claim 3, wherein before receiving the first data packet sent from the first device to the second device, the method further comprises:
acquiring the IP address of the first device, the control identification of the first device, the IP address of the second device, and the control identification of the second device respectively; and
establishing the first correspondence and the second correspondence.

5. The method according to claim 3 or 4, wherein the second correspondence further comprises a correspondence between the IP address of the second device and an identification of a link layer of the communication protocol used by the second device; and sending the third data packet to the second device comprises:
sending the third data packet to the second device through the link layer of the communication protocol used by the second device.

6. The method according to any one of claims 1 to 4, wherein the target format comprises: an identification field, a mac header field, a control field, and a data field set sequentially;
the identification field is used to carry: an identification of a device for sending/receiving a data packet, and an identification of a communication protocol used by a device for sending/receiving a data packet;
the mac header field is used to carry: a mac address of a device for sending and receiving a data packet;
the control field is used to carry a data format of a data field;
the data field is used to carry: an IP address of a device for sending and receiving a data packet, and target data.

7. The method according to claim 6, wherein the target format further comprises a padding field;
the padding field is used to carry a preset character, and the preset character is used to pad the data field with data in a case where a data length of the data field is less than a total length of the data field.

8. The method according to any one of claims 1 to 4, wherein the target format is further used to carry a sending priority of the data packet; and the method further comprises:
in response to that the gateway receives a plurality of data packets, sending the plurality of data packets according to an order of a sending priority of the plurality of data packets respectively; wherein the plurality of data packets comprise the first data packet.

9. The method according to claim 8, wherein the sending priority of the data packet is determined based on a number of data packets buffered by the gateway;
in response to that a number of data packets sent from the first device buffered in the gateway is greater, the sending priority set for the first data packet is higher.

10. The method according to claim 6, wherein in response to that the target format comprises the control field, the control field is further used to carry a sending priority of the data packet.

11. The method according to any one of claims 1 to 4, wherein the communication protocol comprises: wireless fidelity (Wi-Fi), Bluetooth, ZigBee, z-wave or Thread.

12. A data transmission apparatus, **characterized by** comprising a memory and a processor; wherein the memory is coupled with the processor;
the memory is configured to store computer program codes, the computer program codes comprise computer instructions;
wherein when the processor executes the computer instructions, so that the data transmission apparatus performs the data transmission method according to any one of claims 1 to 11.

13. A computer readable storage medium, **characterized in that** the computer readable storage medium has stored computer instructions; wherein when the computer instructions, when executed on a data transmission apparatus, cause the data transmission apparatus to perform the data transmission method according to any one of claims 1 to 11.
